# EUROPEAN PATENT SPECIFICATION

(11) **EP 3 034 853 B1**
(45) Date of publication and mention of the grant of the patent: **23.05.2018**
(21) Application number: 14197891.6
(22) Date of filing: 15.12.2014
(51) Int. Cl.: F02M 51/06

(54) **Coil assembly and fluid injection valve**
Spulenanordnung und Einspritzventil für Flüssigkeit
Ensemble de bobine et soupape d'injection de fluide

(43) Date of publication of application: 22.06.2016
(73) Proprietor: Continental Automotive GmbH, 30165 Hannover (DE)
(72) Inventor: Filippi, Stefano, 57010 Castel' Anselmo Collesalvetti (IT); Grandi, Mauro, 57128 Livorno (IT); Lenzi, Francesco, 57128 Livorno (IT); Polidori, Valerio, 57128 Livorno (IT)

(56) References cited:
- EP-A1- 0 204 181
- EP-A1- 2 733 401
- EP-A2- 0 136 594
- EP-A2- 0 404 357
- EP-A2- 1 288 489
- DE-A1- 3 703 615
- US-A- 4 779 331

## Description

The present disclosure relates to a coil assembly for an electromagnetic actuator of a fluid injection valve and to a fluid injection valve.

Fluid injection valves with electromagnetic actuators are used for example in automotive applications. The electromagnetic actuators have coils which may be designed to optimize current losses in the coil turns and maximize the magnetic field.

The magnetic behavior of the fluid injection valve, and in particular the development of the magnetic field when the coil is energized, depend on the penetration of the magnetic field through components of the fluid injection valve along the magnetic path of the electromagnetic actuator.

EP 1288489 A2 discloses a linear control valve which is regulating the flow of fluid to hydraulically activated devices, preferably a fuel injector and an engine compression release brake. The valve includes a valve member that is moveable between a first position in which the fuel injector is, at least partially, activated, a second position in which neither the fuel injector nor the engine compression release brake is activated, and a third position in which the engine compression release brake is activated. An electrical actuator providing two permanent magnets and two oppositely wound solenoid coils moves the valve member between its three positions. The polarity of the permanent magnets are oriented such that when the solenoids are energized, one solenoid coil pulls the valve member while the other solenoid coil pushes the valve member in the same direction.

EP 2733401 A1 describes a solenoid actuator. The solenoid actuator comprises an armature, pole piece(s), electromagnet coil(s) arranged, in response to energisation, to cause travel of the armature between first and second positions along a direction of travel, wherein travel of the armature is bounded in the direction of travel by the pole piece(s), permanent magnet(s) positioned and orientated for latching the armature in at least the first position when the armature is in the first position and spring(s) arranged to bias the armature. The spring(s) is (are) configured to provide sufficient force so as to prevent the armature from latching in second position and the at least one spring has a (net) spring constant, k (N/µm), in a range of 5 Ncm -2 × A/t to 20 Ncm -2 × A/t, where A is the active area of a pole piece in cm 2 and t is the gap length in µm between the armature and a pole piece.

EP 0204181 A1 relates to an electromagnet which serves particularly to control a fuel injection valve for fuel injection systems in internal combustion engines. The electromagnet includes an inner core of soft-magnetic material, which is surrounded by a magnetic coil. An outer core at least partly surrounds the magnetic coil and has an outer pole located in the same plane as an inner pole of the inner core. On one side of the magnetic coil, between the inner core and the outer core, there is a first annularly embodied and radially magnetized permanent magnet, and on the other side of the magnetic coil there is a second annularly embodied and radially magnetized permanent magnet. Facing the poles, there is an armature, which at one end is joined to a valve needle that has a valve body cooperating with a valve seat, and on its other end forms a first working air gap with the outer pole and a second working air gap with the inner pole. The permanent magnets are poled such that their magnetic fields at the working air gaps extend counter to the electromagnetic field induced by the magnetic coil.

US 4779331 A discloses an electromagnetically actuatable fuel injection valve, which serves to supply fuel to mixture-compressing internal combustion engines having externally supplied ignition. The fuel injection valve includes a base plate into which pole pieces having bent poles are inserted. Magnetic coils are fitted onto the pole pieces. A first permanent magnet is inserted between the poles and a second permanent magnet is disposed between the magnetic conductor elements disposed on the other end of the pole pieces. Beginning at the base plate, the magnetic coils and the pole pieces are provided with a sprayed-on plastic jacket. The plastic jacket is inserted together with the base plate into an internal housing bore of a valve housing. A valve group is inserted into an outlet pipe of the valve housing which has an armature oriented toward the poles and joined with a valve needle which on its other end has a closing head that cooperates with a valve seat on a valve seat body and can be raised from the valve seat in the fuel flow direction.

The electromagnetically actuatable fuel injection valve disclosed by DE 3703615 A1 has an internal scavenging system for cleaning dirt particles from a magnetic field air gap. A portion of the fuel flowing in via an inflow line and an inflow opening reaches the vicinity of an air gap defined on one side by an armature and on the other by magnetic poles and flows through this gap, and then flows via an outflow opening to enter an outflow line that communicates with a fuel return. As a result of the described scavenging of the air gap, dirt particles are prevented from becoming firmly attached there and causing impairment of the performance of the fuel injection valve.

EP 404357 A2 relates to a solenoid-actuated valve assembly having first and second valve members, first and second valve seats, a solenoid coil, a first permanent magnet armature effective, when the coil is energized with a positive current, to permit displacement of the first valve member from the first valve seat; and a second permanent magnet armature effective, when the coil is energized with a negative current, to displace the second valve member from the second valve seat. The first armature is further effective, when the coil is energized with a negative current, to bias the first valve member into engagement with the first valve seat, and said second armature is further effective, when the coil is energized with a positive current, to bias the second valve member into engagement with the second valve seat.

EP 136594 A2 proposes an electromagnet which serves in particular to actuate a fuel injection valve for fuel injection systems in internal combustion engines. The electromagnet includes a first pole piece disposed at one side of a first permanent magnet and a second pole piece disposed at the other side of the first permanent magnet. The pole pieces each have one conduction section bent at an angle, which sections are oriented toward one another and define a gap therebetween. Divided from the first permanent magnet by the conduction sections, a magnet coil is disposed on each pole piece. The first pole piece has a pole oriented toward the armature, and the second pole piece has a pole. When the magnet coils are not excited, the armature is drawn in the direction toward the poles by one component (phi p2) of the permanent magnetic flux. If the magnet coils experience a flow through them of a current (i) in such a manner that an electromagnetic flux (phi i) flows through the armature in the opposite direction from the flux (phi p2), then the armature drops away from the poles whenever the electromagnetic flux (phi i) becomes equal to the component (phi p2) of the permanent magnetic flux.

It is an object of the present invention to provide a coil assembly for an electromagnetic actuator of a fluid injection valve which enables particularly advantageous magnetic properties.

This object is achieved by a coil assembly and a fluid injection valve according to the independent claims. Advantageous embodiments and developments of the coil assembly and the fluid injection valve are specified in the dependent claims, the following description and the figures.

According to a first aspect, a coil assembly for an electromagnetic actuator of a fluid injection valve is specified. According to a second aspect, a fluid injection valve having an electromagnetic actuator which comprises the coil assembly is specified. The fluid injection valve is in particular a fuel injection valve. It is preferably configured for injecting fuel, such as gasoline or diesel, directly into a combustion chamber of an internal combustion engine.

The coil assembly comprises a coil which is in particular a solenoid. The solenoid has a central axis and in particular a plurality of turns which are wound - in particular helically wound - around the central axis. Additionally, the coil assembly comprises a first permanent magnet and a second permanent magnet.

In one embodiment, the coil assembly further comprises a coil housing in which the solenoid and the first and second permanent magnets are arranged. In one development, the coil housing comprises or represents a yoke of the electromagnetic actuator.

The fluid injection valve comprises a fluid tube which hydraulically connects a fluid inlet end of the fluid injection valve to a fluid outlet end of the fluid injection valve. The coil assembly is preferably attached to the fluid tube an outer circumferential surface of the fluid tube. The fluid tube may be assembled from a plurality of parts, such as a valve body and a fluid inlet tube upstream of the valve body. In the valve body, a valve needle of the fluid injection valve may be arranged to interact with a valve seat of the valve body to open and close the fluid outlet end for controlling fluid flow from the fluid injection valve.

In an expedient embodiment, the actuator further comprises a pole piece. The pole piece is preferably fixed to an inner circumferential surface of the fluid tube. In another expedient embodiment, the actuator further comprises a movable armature in the fluid tube which is attractable by the magnetic field generated by the solenoid in operation to move axially towards the pole piece. More specifically, the armature is axially movable along the central axis in reciprocating fashion relative to the fluid tube. It is preferably mechanically coupled to the valve needle so that it is operable to displace the valve needle out of contact with the valve seat due to its movement towards the pole piece.

In one embodiment, the coil housing and/or the fluid tube and/or the pole piece and/or the armature are made of a magnetic material at least in places. For example the coil housing and/or the fluid tube and/or the pole piece and/or the armature comprise or consist of magnetic stainless steel such as ferromagnetic stainless steel, for example stainless steel having the SAE steel grade 430.

The invention makes use of the idea that magnetic material within the magnetic path of the electromagnetic actuator may be pre-magnetized before the solenoid is energized by means of the permanent magnets. In this way, a particularly fast magnetic saturation of the coil housing, the fluid tube, the pole piece and/or the armature is achievable in the region of the magnetic path of the electromagnetic actuator. Energy losses at the beginning of the energization of the solenoid - e.g. due to the generation of eddy currents - may be particularly small. With advantage, full magnetization in the magnetic path of the actuator is achievable at least as fast as a peak current through the solenoid is reached. Therefore, particularly small energy consumption, fast valve opening transients and/or precise control of the valve needle are achievable. In particular, a fast increase and large maximum value of the magnetic force on the armature at the beginning of the opening transient of the fluid injection valve can be realized in this way. Therefore, particularly large hydraulic loads may be overcome so that the fluid injection valve according to the present disclosure is particularly well suited for operating at high fluid pressures, such as 250 bar and above, for example up to 500 bar.

In one embodiment, each of the first and second permanent magnets is in the shape of a cylindrical shell. In particular, each of the first and second permanent magnets has a central axis which is coaxial with the central axis of the solenoid. In this way, a particularly homogeneous distribution of the magnetic field which is generated by the permanent magnets with respect to the central axis is achievable. With advantage, the magnetic fields which are generated by the first and second permanent magnets have a similar basic shape as the magnetic field which is generated by the solenoid in operation.

In an expedient embodiment, the coil assembly has a central opening which extends through the coil assembly along the central axis for receiving the fluid tube of the fluid injection valve. When the fluid injection valve is assembled, the fluid tube in particular projects axially beyond the coil assembly towards the fluid inlet end and towards the fluid outlet end. The solenoid, the first permanent magnet and the second permanent magnet extend circumferentially around the central opening. Such an arrangement is advantageous for pre-magnetizing the pole piece and/or the armature by means of the first and second permanent magnet.

The first permanent magnet is positioned inside the solenoid and the second permanent magnet is positioned outside of the solenoid in a mutually axially overlapping fashion. In particular, the solenoid extends circumferentially around the first permanent magnet and the second permanent magnet extends circumferentially around the solenoid. In one development, the first permanent magnet, the solenoid and the second permanent magnet have the same axial dimension. In this way, a particularly advantageous magnetic field distribution of the magnetic field which is generated by the permanent magnets is achievable with respect to the magnetic field of the solenoid.

In one embodiment, the first permanent magnet and the second permanent magnet are magnetized in axial direction. This is particularly advantageous combination with an arrangement of the first permanent magnet inside the solenoid and the second permanent magnet outside of the solenoid in mutually axially overlapping fashion.

In one development, the magnetization direction of the first permanent magnet is anti-parallel to the magnetization direction of the second permanent magnet. In this case, the influence of the permanent magnets on the balance of forces which act on the armature is particularly small. Therefore, the permanent magnets may have only little influence on the design of the fluid injection valve. However, for example due to the different radial dimensions of the permanent magnets, the magnetic field of the first permanent magnet and the second permanent magnet does not vanish completely inside of the solenoid, where portions of the pole piece and/or the armature are arranged. In this way, a particularly small step variation of the inductive field of the solenoid in the region of the armature and the pole piece may be achievable due to the pre-magnetization by means of the first and second permanent magnet.

In an alternative development, the first permanent magnet and the second permanent magnet are magnetized in the same direction to generate a first magnetic field on the central axis. In particular in this case, the solenoid may preferably be configured for being energized to produce a second magnetic field on the central axis in the same direction as the first magnetic field. In this way, a particularly high fluid magnetic flux through the armature is achievable so that the armature can transfer a particularly large force on the valve needle.

In one embodiment, the coil assembly comprises an electrical connector which is electrically connected to the solenoid. The electrical connector is in particular configured for connecting the fuel injection valve to an electronic control unit.

Further advantages, advantageous embodiments and developments of the coil assembly, the electromagnetic actuator and the fluid injection valve will become apparent from the exemplary embodiments which are described below in association with the figures.

In the figures:
- Figure 1: shows a fluid injection valve according to a first exemplary embodiment in a longitudinal section view,
- Figure 2: shows a fluid injection valve according to a currently unclaimed embodiment in a longitudinal section view,
- Figure 3: shows a portion of the fluid injection valve according to the first exemplary embodiment in an enlarged schematic longitudinal section view,
- Figure 4: shows a portion of a variant of the fluid injection valve according to a variant of the first exemplary embodiment in a schematic longitudinal section view, and
- Figure 5: shows a portion of the fluid injection valve according to the currently unclaimed embodiment according to Fig. 2 in an enlarged schematic longitudinal section view.

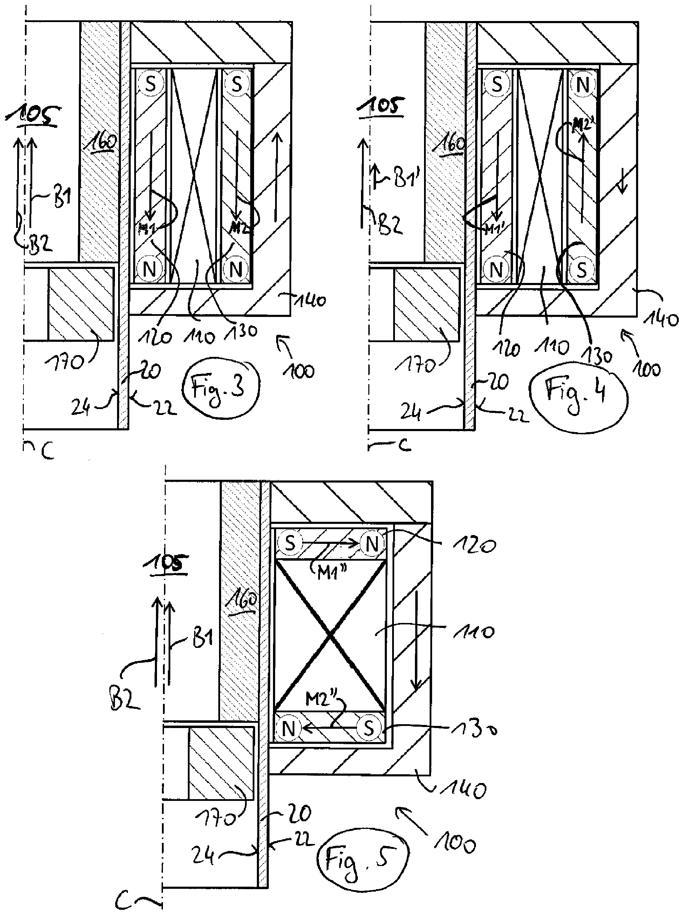

In the exemplary embodiments and figures, similar, identical or similarly acting elements are provided with the same reference symbols. In some figures, individual reference symbols may be omitted to improve the clarity of the figures. Figures 3 to 5 are not regarded to be true to scale. Rather, individual elements in these figures may be exaggerated in size for better representability and/or better understanding.

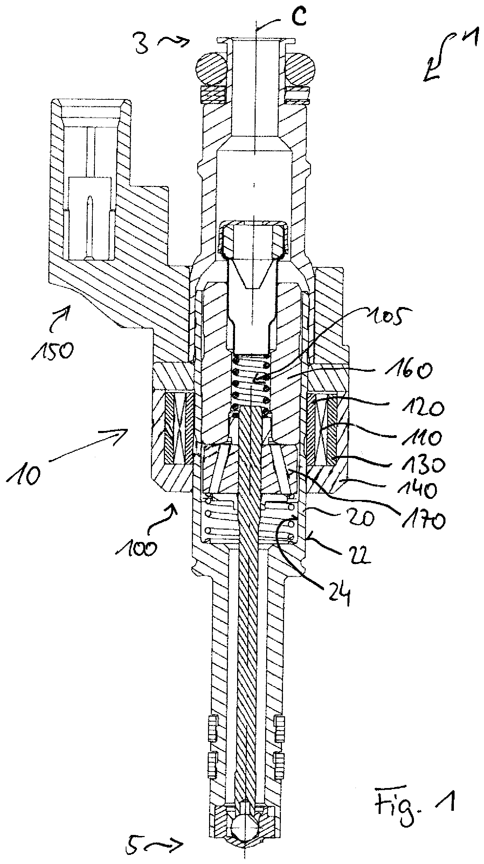

Figure 1 shows a sectional view of a fluid injection valve 1 according to a first exemplary embodiment of the invention in a sectional plane comprising a longitudinal, central axis C of the fluid injection valve 1. The fluid injection valve 1 is a fuel injection valve for an internal combustion engine. It is configured to inject fuel directly into a combustion chamber of the combustion engine. For example, the fuel is diesel or gasoline.

The fluid injection valve 1 has a fluid tube 20 which extends from a fluid inlet end 3 of the fluid injection valve 1 to a fluid outlet end 5 of the fluid injection valve 1. The fluid tube 20 is assembled from a plurality of individual parts and comprises in the present embodiment a fluid inlet tube at the fluid inlet end 3, a valve body downstream of the fluid inlet tube and a nozzle body which closes the valve body at the fluid outlet end 5. The nozzle body has one or more injection holes for dispensing fluid from the fluid injection valve 1 and comprises a valve seat. In addition, a valve needle is arranged in the valve body. The valve needle is movable in reciprocating fashion with respect to the valve body and interacts with the valve seat to seal the injection holes in a closing position of the valve needle in which the valve needle is in sealing contact with the valve seat. It is axially displaceable away from the valve seat to enable a fluid flow through the injection holes.

Further, the fluid injection valve 1 comprises an electromagnetic actuator 10. The electromagnetic actuator 10 comprises a coil assembly 100, a pole piece 160 and a magnetic armature 170. The pole piece 160 is positioned in the valve body and fixed to an inner circumferential surface 24 of the valve body. The armature 170 is arranged in the valve body. It is movable in reciprocating fashion relative to the valve body and is mechanically coupled to the valve needle so that it is operable to displace the valve needle away from the closing position when it moves towards the pole piece 160. For example, an outer contour of the armature 170 and/or the pole piece 160 has a radius which is in the range between 6 mm and 7 mm, the limits being included.

Movement of the armature 170 towards the pole piece 160 is effected by means of a variable magnetic field generated by the coil assembly 100. For generating the variable magnetic field, the coil assembly 100 comprises a solenoid 110. The coil assembly 100 further comprises an electrical connector 150 for supplying electrical power to the solenoid 110. The solenoid 110 has a central axis C which coincides with the central axis of the fluid injection valve 1.

Further, the coil assembly 100 has a metallic housing 140 which, together with the valve body of the fluid tube 20, the armature 170 and the pole piece 116 defines a magnetic path for the magnetic field of the electromagnetic actuator 10. The housing 140 thus may represent a yoke of the actuator 10.

The coil assembly 100 further comprises a first permanent magnet 120 and a second permanent magnet 130. Both permanent magnets 120, 130 are in the shape of cylindrical shells which share the central axis C with the solenoid 110.

Each of the permanent magnets 120, 130 has an axial dimension in the range of 8 mm to 14 mm, the limits being included. The thickness - i.e. the radial dimension of the cylinder shell - is, for example in the range between 1 mm and 1.5 mm, the limits being included. Such dimensions are also suitable for other embodiments of the invention.

The solenoid 110, the first permanent magnet 120 and the second permanent magnet 130 are received in the housing 140 of the coil assembly 100. More specifically, the housing 140 has a cylindrical wall portion and a bottom wall portion extending radially inward from the cylindrical wall portion at one axial end of the cylindrical wall portion so that the two wall portions form a recess in which the solenoid 110 and the permanent magnets are arranged. In the present embodiment, the cylindrical wall portion and the bottom wall portion are in one piece. The bottom wall portion preferably axially overlaps with the armature 170. Further, the housing 140 has an optional cover which is adjoins the axial end of the cylindrical wall portion opposite of the bottom wall portion and extends in radial inward direction from the cylindrical wall portion. The cover limits the recess on the side remote from the bottom wall portion. Expediently, it may be an individual part, positioned on the cylindrical wall portion after insertion of the solenoid 110 and the permanent magnets 120, 130 in the recess. In the present embodiment, the housing 140 has a generally cylindrical outer shape - defined by the cylindrical wall portion - the diameter of which is, for example, 21.5 mm or less.

The first permanent magnet 120, the solenoid 110, the second permanent magnet 130 and the cylindrical wall portion of the housing 140 follow one another in this order in radial outward direction, i.e. away from the central axis C. The first permanent magnet 120, the solenoid 110, and the second permanent magnet 130 overlap in axial direction. Preferably, they have the same axial dimension and axial position, so that they are in particular flush with respect to one another in axial direction. In other words, the first permanent magnet 120 is positioned inside the solenoid 110 and the second permanent magnet 130 is positioned outside of the solenoid 110 in mutually axially overlapping fashion, in particular in completely axially overlapping fashion.

The coil assembly 100 has a central opening 105 which extends through the coil assembly 100 along the central axis C. In the present embodiment, the central opening 105 is defined by inner circumferential surfaces of the first permanent magnet 120 and of the housing 140 of the coil assembly 100. In particular, the bottom wall portion and the cover of the housing have central through holes, the surfaces of which define axial end portions of the central opening 105, while a middle portion of the central opening 105 is defined by the inner circumferential surface of the first permanent magnet 120.

The first permanent magnet 120, the solenoid 110, and the second permanent magnet 130, as well as the housing 140 extend circumferentially around the central opening 105. The fluid tube 20 is received in the central opening 105 and the coil assembly 100 is fixed to an outer circumferential surface 22 of the valve body. For example, the housing 114 is connected to the outer circumferential surface 22 by means of a friction fit and/or a welded connection.

Figure 3 shows an enlarged and schematic longitudinal section view of the fluid injection valve 1 in the region of the coil assembly 100. In figure 3, only the portion of the fluid injection valve 1 on the right-hand side of the central axis C is shown in order to simplify the representation.

The magnetization of the permanent magnets 120, 130 is roughly indicated in figure 3 by means of indicating the south poles S and the north poles N of the first permanent magnet 120 and the second permanent magnet 130, as well as the respective magnetization directions M1 and M2. The magnetization directions M1 and M2 are chosen to represent the direction from the south pole S to north pole N within the respective permanent magnet 120, 113.

In the present exemplary embodiment, the first permanent magnet 120 and the second permanent magnet 130 are magnetized in the same axial direction M1, M2. In this way, they generate a first magnetic field B1 in the longitudinal section of the magnetic path which extends through the opening 105 of the coil assembly 110. This section of the magnetic path comprises the pole piece 160 and the armature 170 and therefore is of particular importance for the magnetic force which is effected on the armature 170.

Due to the magnetization in the same axial direction M1, M2, a comparatively large magnetic field B1 in this section of the magnetic path, represented by the magnetic field B1 on the central axis C, is produced by the permanent magnets 120, 130.

The electromagnetic actuator 10 is configured for energizing the solenoid 110 in such fashion as to produce a second magnetic field B2 in said section of the magnetic path - and thus on the central axis C - which is directed in the same direction as the first magnetic field B1. Such configuration may be achieved by selecting the winding direction of the turns of the solenoid 110 and the current direction in a way which is in principle well known to the person skilled in the art. A magnetic field of particularly large magnitude is producible in that section of the magnetic path where the armature 117 is arranged in this way. Thus, a particularly large magnetic force on the armature 170 is achievable.

In addition, the first magnetic field B1 which is generated by the permanent magnets 120, 130 effects a pre-magnetization of the housing 140 of the coil assembly 100, of the fluid tube 20, of the armature 170 and of the pole piece 160, all of which are made from magnetic materials. For example one, some or all of them are made from magnetic stainless steel, for example from stainless steel having the SAE steel grade 430. In this way, energy consumption for aligning the magnetic domains of these parts when the solenoid 110 is energized may be particularly small and the magnetic field may penetrate through the magnetic path of the actuator 10 particularly fast.

In one embodiment, a method for operating the fluid injection valve 1 during an injection event for dispensing a predetermined amount of fluid comprises feeding an operating current to the solenoid 110 via the electrical connector 150. The operating current is controlled to rise from a closed state value - for example from zero - to a peak value during an opening transient of the valve and is subsequently reduced to a holding value - which is smaller than the peak value - for retaining the valve in a stable open position for a predetermined amount of time, before it is reduced to the closed state current at the end of an injection event.

The period of time in which the operating current rises from the closed state value to the peak value may be denoted as the "boost phase". It has, for example, a length between 250 µs and 350 µs. The peak value of the operating current at the end of the boost phase is, for example, in the range between 10 A and 16 A, preferably between 10 A and 12 A, the limits being included in each case. The holding value is, for example between 3 A and 5 A, the limits being included.

This method is also suitable for any other embodiment of the invention.

With advantage, full magnetization and saturation of the magnetic field is achievable within the boost phase with the present fluid injection valve 1. In one embodiment, the magnetic field strength, often denoted as H, may have a maximum value in the range between 50 kA/m and 100 kA/m, the limits being included, inside the solenoid 110. In contrast thereto, conventional fluid injection valves of similar construction, but without the first and second permanent magnets 120, 130, may have larger magnetic diffusion times of, for example, 400 µs to 500 µs.

Due to the large magnetic force and the fast magnetization and saturation, particularly large hydraulic pressures can be overcome when moving the valve needle out of the closing position. Therefore, the present fluid injection valve 1 is particularly well-suited for operating at high fluid pressures, for example of 250 bar and above, e.g. between 300 bar and 500 bar. For example, the fluid injection valve is configured for operating at a nominal operating pressure of 350 bar.

Therefore, with respect to conventional fluid injection valves, at least one of the opening time, the energy consumption during the boost phase, the magnetic force and the maximum operation pressure may be improved with the fluid injection valve 1 according to the present invention. The inventors have found out that satisfactory results can be achieved by powering the solenoid 110 with an electrical energy of about 100 mJ in the boost phase while conventional injection valves would require 20 % to 40 % more electrical energy.

Figure 4 shows a schematic longitudinal section view - corresponding to that of figure 3 - of a fluid injection valve 1 according to a variant of the first exemplary embodiment. The fluid injection valve 1 according to this variant corresponds in general to that of the first exemplary embodiment.

However, the permanent magnets 120, 130 are not magnetized in the same axial direction. Rather, the first permanent magnet 120 and the second permanent magnet 130 are magnetized in opposite axial directions M1' and M2' with respect to the central axis C. The magnetization directions M1' and M2' are antiparallel. In this way, the magnetic field B1' on the central axis C - i.e. in that section of the magnetic path which comprises the pole piece 160 and the armature 170 - is particularly small. However, for example due to the different sizes of the permanent magnets 120, 130 - which have in particular different radial dimensions - and/or due to differing magnitudes of the magnetization of the permanent magnets 120, 130, the first magnetic field B1' is not completely vanishing. As in the first embodiment, the electromagnetic actuator 10 is preferably configured for energizing the coil in such fashion that the second magnetic field B2 on the central axis C is directed in the same direction as the first magnetic field B1', in particular to achieve a particularly large magnetic force on the armature 170 and to maintain the orientation of the magnetic domains when the solenoid 110 is energized.

Thus, as in the first exemplary embodiment, a particularly fast full magnetization and saturation of the magnetic field is achieved when the solenoid 110 is energized. In particular, the step magnetization of the magnetic field in the longitudinal section of the magnetic path which comprises the pole piece 160 and the armature 170 may be particularly small due to the pre-magnetization. For achieving comparable opening behavior as in a conventional fluid injection valve without the permanent magnets 120, 130, the solenoid 110 may have, for example, between 70 and 100 turns, the limits being included. This is about 15% to 40% less than what would be required in the conventional fluid injection valve.

At the same time, while the housing 140, the fluid tube 20, the pole piece 160 and the armature 170 are pre-magnetized by the magnetic field from the permanent magnets 120, 130, the first magnetic field B1' does not greatly influence the dynamic behavior of the fluid injection valve 1 due to its comparatively small magnitude. Therefore, first and second permanent magnets 120, 130, may not require substantial changes, for example with respect to the calibration of the fluid injection valve 1 and/or with respect to its design, for example relating to the stiffness of a return spring which is operable to bias the valve needle towards the closing position.

Possible materials for the first and second permanent magnets 120, 130 in this or any other embodiment are, for example, NdFeB, plasto-neodymium or ferrites. NdFeB is in particular understood to mean the material Nd2Fe14B, sometimes also denotes as NIB or Neo. Plasto-neodymium is in particular a composite material of NdFeB particles and a plastic binder. The material can be selected you to temperature and design requirements.

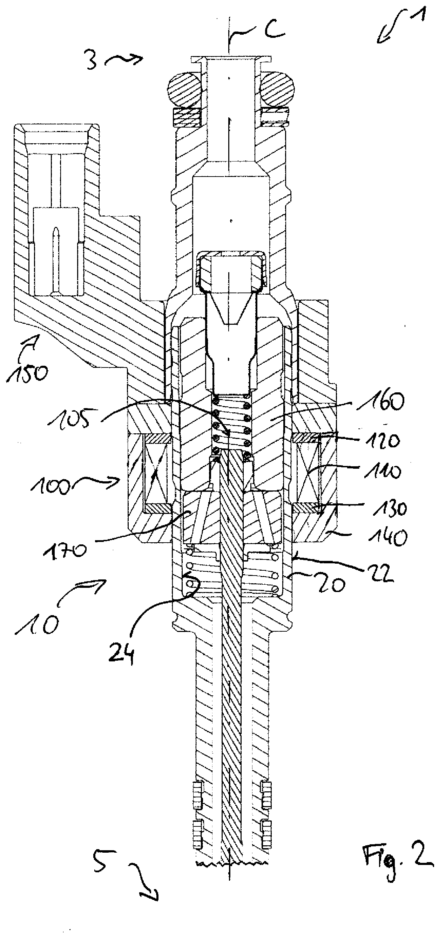

Figure 2 shows a fluid injection valve 1 according to a currently unclaimed embodiment in a longitudinal section view. Figure 5 shows a section of the fluid injection valve 1 of the unclaimed embodiment in a schematic and enlarged sectional view corresponding to the views of figures 3 and 4.

The fluid injection valve 1 according to the unclaimed embodiment corresponds in general to that of the first exemplary embodiment. However, the permanent magnets 120 and 130 are not arranged in radially subsequent fashion as in the first embodiment. Rather, the first permanent magnet 120 and the second permanent magnets 130 axially sandwich the solenoid 110. The permanent magnets 120, 130 and the solenoid 110 overlap radially and are in the present embodiment also flush in radial direction. By means of this configuration, a particularly the small radial dimension of the fluid injection valve 1 is achievable. The axial dimension of the permanent magnets 120, 130 may be particularly small, so that the permanent magnets 120, 130 may be manufactured particularly cost-effective.

In order to create a magnetic field B1 on the central axis C, i.e. in that section of the magnetic path of the actuator 10 which comprises the pole piece 160 and the armature 170, the first permanent magnet 120 and the second permanent magnet 113 are both magnetized in radial direction in the present embodiment. More specifically, they are magnetized in opposite radial directions M1" and M2" so that the magnetic field of both permanent magnets 120, 130 is directed in the same direction inside the solenoid 110. It, thus, sums up to a comparatively large first magnetic field B1 on the central axis C as in the first embodiment.

## Claims

1. Coil assembly (100) for an electromagnetic actuator (10) of a fluid injection valve (1) comprising a solenoid (110) having a central axis(C), a first permanent magnet (120) and a second permanent magnet (130) **characterized in that**
the first permanent magnet (120) is positioned inside the solenoid (110) and the second permanent magnet (130) is positioned outside of the solenoid (110) in a mutually axially overlapping fashion.

2. The coil assembly (100) according to the preceding claim, wherein each of the first and second permanent magnets (120, 130) is in the shape of a cylindrical shell.

3. The coil assembly (100) according to one of the preceding claims, having a central opening (105) which extends through the coil assembly (100) along the central axis (C) for receiving a fluid tube (20) of the fluid injection valve (1), wherein the solenoid (110), the first permanent magnet (120) and the second permanent magnet (130) extend circumferentially around the central opening (105).

4. The coil assembly (100) according to one of the preceding claims, wherein the first permanent magnet (120) and the second permanent magnet (130) are magnetized in axial direction (M1, M2; M1', M2').

5. The coil assembly (100) according to the preceding claim, wherein the magnetization direction (M1') of the first permanent magnet (120) is anti-parallel to the magnetization direction (M2') of the second permanent magnet (130).

6. The coil assembly (100) according to claim 4, wherein the first permanent magnet (120) and the second permanent magnet (130) are magnetized in the same direction (M1, M2) to generate a first magnetic field (B1) on the central axis (C) and the solenoid (110) is configured for being energized to produce a second magnetic field (B2) on the central axis (C) in the same direction as the first magnetic field.

7. The coil assembly (100) according to one of the preceding claims, further comprising a coil housing (140) in which the solenoid (110) and the first and second permanent magnets (120, 130) are arranged and/or an electrical connector (150) which is electrically connected to the solenoid (110).

8. The coil assembly (100) according to the preceding claim, wherein the coil housing (140) is made of a magnetic material at least in places.

9. Fluid injection valve (1) comprising a fluid tube (20) which hydraulically connects a fluid inlet end (3) of the fluid injection valve (1) to a fluid outlet end (5) of the fluid injection valve (1) and an electromagnetic actuator (10) which has a coil assembly (100) according to one of the preceding claims, the coil assembly (100) being attached to an outer circumferential surface (22) of the fluid tube (20).

10. Fluid injection valve (1) according to the preceding claim, wherein the actuator (10) further comprises a pole piece (160) which is fixed to an inner circumferential surface (24) of the fluid tube (20) and a movable armature (170) which is attractable by the magnetic field (B2) generated by the solenoid (110) in operation to move axially towards the pole piece (160).

11. Fluid injection valve (1) according to claim 9 or 10, wherein the fluid tube (20) and/or the pole piece (160) and/or the armature (170) are made of a magnetic material at least in places.

## Patentansprüche

1. Spulenanordnung (100) für einen elektromagnetischen Aktuator (10) eines Flüssigkeitseinspritzventils (1), das einen Elektromagneten (110) mit einer Mittelachse (C), einen ersten Dauermagneten (120) und einen zweiten Dauermagneten (130) aufweist,
**dadurch gekennzeichnet, dass**
der erste Dauermagnet (120) innerhalb des Elektromagneten (110) positioniert ist und der zweite Dauermagnet (130) außerhalb des Elektromagneten (110) in einer zueinander axial überlappenden Weise positioniert ist.

2. Spulenanordnung (100) nach dem vorstehend aufgeführten Anspruch, wobei der erste und der zweite Dauermagnet (120, 130) jeweils die Form eines zylindrischen Mantels hat.

3. Spulenanordnung (100) nach einem der vorstehend aufgeführten Ansprüche, die eine Zentralöffnung (105) hat, die sich durch die Spulenanordnung (100) entlang der Mittelachse (C) erstreckt, um ein Flüssigkeitsrohr (20) des Flüssigkeitseinspritzventils (1) aufzunehmen, wobei sich der Elektromagnet (110), der erste Dauermagnet (120) und der zweite Dauermagnet (130) umfänglich um die Zentralöffnung (105) erstrecken.

4. Spulenanordnung (100) nach einem der vorstehend aufgeführten Ansprüche, wobei der erste Dauermagnet (120) und der zweite Dauermagnet (130) in axialer Richtung (M1, M2; M1', M2') magnetisiert sind.

5. Spulenanordnung (100) nach dem vorstehend aufgeführten Anspruch, wobei die Magnetisierungsrichtung (M1') des ersten Dauermagneten (120) antiparallel zur Magnetisierungsrichtung (M2') des zweiten Dauermagneten (130) verläuft.

6. Spulenanordnung (100) nach Anspruch 4, wobei der erste Dauermagnet (120) und der zweite Dauermagnet (130) in derselben Richtung (M1, M2) magnetisiert sind, um ein erstes Magnetfeld (B1) auf der Mittelachse (C) zu erzeugen, und wobei der Elektromagnet (110) ausgebildet ist, um erregt zu werden, so dass ein zweites Magnetfeld (B2) auf der Mittelachse (C) in derselben Richtung wie das erste Magnetfeld entsteht.

7. Spulenanordnung (100) nach einem der vorstehend aufgeführten Ansprüche, die weiterhin ein Spulengehäuse (140) aufweist, in dem der Elektromagnet (110) und der erste und zweite Dauermagnet (120, 130) angeordnet sind und/oder ein elektrischer Verbinder (150) vorgesehen ist, der elektrisch mit dem Elektromagneten (110) verbunden ist.

8. Spulenanordnung (100) nach dem vorstehend aufgeführten Anspruch, wobei das Spulengehäuse (140) mindestens stellenweise aus einem magnetischen Material hergestellt ist.

9. Flüssigkeitseinspritzventil (1), das ein Flüssigkeitsrohr (20), das ein Flüssigkeitseinlassende (3) des Flüssigkeitseinspritzventils (1) hydraulisch mit einem Flüssigkeitsauslassende (5) des Flüssigkeitseinspritzventils (1) verbindet, sowie einen elektromagnetischen Aktuator (10) aufweist, der eine Spulenanordnung (100) nach einem der vorstehend aufgeführten Ansprüche hat, wobei die Spulenanordnung (100) an einer äußeren Umfangsoberfläche (22) des Flüssigkeitsrohrs (20) befestigt ist.

10. Flüssigkeitseinspritzventil (1) nach dem vorstehend aufgeführten Anspruch, wobei der Aktuator (10) weiterhin einen Polschuh (160), der an einer inneren Umfangsoberfläche (24) des Flüssigkeitsrohrs (20) befestigt ist, sowie einen beweglichen Anker (170) aufweist, der vom Magnetfeld (B2), das vom Elektromagneten (110) im Betrieb erzeugt wird, angezogen werden kann, um sich axial hin zum Polschuh (160) zu bewegen.

11. Flüssigkeitseinspritzventil (1) nach Anspruch 9 oder 10, wobei das Flüssigkeitsrohr (20) und/oder der Polschuh (160) und/oder der Anker (170) mindestens stellenweise aus einem magnetischen Material hergestellt sind.

## Revendications

1. Ensemble formant bobine (100) pour un dispositif d'actionnement électromagnétique (10) d'une soupape d'injection de fluide (1) comprenant un solénoïde (110) présentant un axe central (C), un premier aimant permanent (120) et un second aimant permanent (130)
**caractérisé en ce que**
le premier aimant permanent (120) est positionné à l'intérieur du solénoïde (110) et le second aimant permanent (130) est positionné à l'extérieur du solénoïde (110) en superposition axiale mutuelle.

2. Ensemble formant bobine (100) selon la revendication précédente, dans lequel chacun des premier et second aimants permanents (120, 130) se présente sous la forme d'une enveloppe cylindrique.

3. Ensemble formant bobine (100) selon l'une des revendications précédentes, comportant une ouverture centrale (105) qui s'étend à travers l'ensemble formant bobine (100) le long de l'axe central (C), destinée à recevoir un tube de fluide (20) de la soupape d'injection de fluide (1), dans lequel le solénoïde (110), le premier aimant permanent (120) et le second aimant permanent (130) s'étendent de manière circonférentielle autour de l'ouverture centrale (105).

4. Ensemble formant bobine (100) selon l'une des revendications précédentes, dans lequel le premier aimant permanent (120) et le second aimant permanent (130) sont aimantés dans la direction axiale (M1, M2 ; M1', M2').

5. Ensemble formant bobine (100) selon la revendication précédente, dans lequel la direction d'aimantation (M1') du premier aimant permanent (120) est anti-parallèle à la direction d'aimantation (M2') du second aimant permanent (130).

6. Ensemble formant bobine (100) selon la revendication 4, dans lequel le premier aimant permanent (120) et le second aimant permanent (130) sont aimantés dans la même direction (M1, M2) afin de générer un premier champ magnétique (B1) sur l'axe central (C) et le solénoïde (110) est configuré pour être excité de façon à produire un second champ magnétique (B2) sur l'axe central (C) dans la même direction que le premier champ magnétique.

7. Ensemble formant bobine (100) selon l'une des revendications précédentes, comprenant en outre un logement de bobine (140) dans lequel le solénoïde (110) et les premier et second aimants permanents (120, 130) sont disposés et/ou un connecteur électrique (150) qui est connecté par voie électrique au solénoïde (110).

8. Ensemble formant bobine (100) selon la revendication précédente, dans lequel le logement de bobine (140) est constitué d'un matériau magnétique au moins par endroits.

9. Soupape d'injection de fluide (1) comprenant un tube de fluide (20) qui relie par voie hydraulique une extrémité d'entrée de fluide (3) de la soupape d'injection de fluide (1) à une extrémité de sortie de fluide (5) de la soupape d'injection de fluide (1) et un dispositif d'actionnement électromagnétique (10) qui comporte un ensemble formant bobine (100) selon l'une des revendications précédentes, l'ensemble formant bobine (100) étant fixé à une surface circonférentielle extérieure (22) du tube de fluide (20).

10. Soupape d'injection de fluide (1) selon la revendication précédente, dans laquelle le dispositif d'actionnement (10) comprend en outre une pièce polaire (160) qui est fixée à une surface circonférentielle intérieure (24) du tube de fluide (20) et une armature mobile (170) qui peut être attirée par le champ magnétique (B2) généré par le solénoïde (110) en cours de fonctionnement afin de se déplacer axialement en direction de la pièce polaire (160).

11. Soupape d'injection de fluide (1) selon la revendication 9 ou 10, dans laquelle le tube de fluide (20) et/ou la pièce polaire (160) et/ou l'armature (170) sont constitués d'un matériau magnétique au moins par endroits.
